# EUROPÄISCHE PATENTSCHRIFT

(11) **EP 3 757 358 B1**
(45) Veröffentlichungstag und Bekanntmachung des Hinweises auf die Patenterteilung: **12.07.2023**
(21) Anmeldenummer: 20176715.9
(22) Anmeldetag: 27.05.2020
(51) Int. Cl.: F01K 23/06, F01K 23/10, F01K 9/00

(54) **ANTRIEBSEINHEIT FÜR EIN KRAFTFAHRZEUG MIT EINER KREISPROZESSVORRICHTUNG**
DRIVE UNIT FOR A MOTOR VEHICLE WITH A CIRCUIT PROCESS DEVICE
UNITÉ D'ENTRAÎNEMENT POUR UN VÉHICULE AUTOMOBILE DOTÉ D'UN DISPOSITIF DE PROCESSUS CYCLIQUE

(30) Priorität: 13.06.2019 DE 102019208651
(43) Veröffentlichungstag der Anmeldung: 30.12.2020
(73) Patentinhaber: VOLKSWAGEN AG, 38440 Wolfsburg (DE)
(72) Erfinder: Carstensen, Asmus, 38557 Osloß (DE); Maischik, Thomas, 38173 Sickte (DE); Semke, Artur, 38446 Wolfsburg (DE); Horn, André, 38104 Braunschweig (DE); Schulenburg, Thomas, 38550 Isenbüttel (DE); Herr, Andreas, 38442 Wolfsburg (DE); Naumann, Hardy, 38442 Wolfsburg (DE)

(56) Entgegenhaltungen:
- EP-A1- 2 554 806
- EP-A1- 3 026 246
- EP-A2- 2 573 335
- WO-A1-2015/143323
- DE-A1-102016 212 232
- DE-A1-102016 216 303

## Beschreibung

Die Erfindung betrifft eine Antriebseinheit für ein Kraftfahrzeug, die eine Brennkraftmasche sowie eine Kreisprozessvorrichtung, in der Abwärme von Abgas eines Verbrennungsmotors der Brennkraftmaschine zur Erzeugung mechanischer Leistung genutzt werden kann, umfasst.

Da der Wirkungsgrad von Brennkraftmaschinen mit Hubkolbenmotoren, die für den Antrieb von Kraftfahrzeugen nahezu ausschließlich eingesetzt werden, bei lediglich ca. einem Drittel der eingesetzten Primärenergie liegt und die übrigen zwei Drittel der bei den Verbrennungsprozessen freigesetzten Wärmeenergie Abwärme darstellt, die entweder über eine Motorkühlung oder über einen Abgasstrang als Verlustwärme an die Umgebung abgegeben wird, stellt die Nutzung von Abwärme des Abgases mittels einer Kreisprozessvorrichtung eine Möglichkeit dar, den Gesamtwirkungsgrad einer Antriebseinheit eines Kraftfahrzeugs zu steigern und damit den Kraftstoffverbrauch zu senken.

Die DE 10 2008 028 467 A1 beschreibt eine solche Vorrichtung zur Nutzung von Abwärme einer Brennkraftmaschine. Dazu ist in den Abgasstrang der Brennkraftmaschine ein erster Wärmetauscher, der Verdampfer, einer Dampfkreisprozessvorrichtung integriert. Die in dem Verdampfer von dem Abgas auf ein Arbeitsmedium der Dampfkreisprozessvorrichtung übertragene Wärmeenergie wird in einer Expansionsvorrichtung teilweise in mechanische Energie umgewandelt, die beispielsweise für einen unterstützenden Antrieb eines Kraftfahrzeugs oder zur Erzeugung elektrischer Energie genutzt werden kann. Stromab der Expansionsvorrichtung wird das Arbeitsmedium in einem zweiten Wärmetauscher, dem Kondensator, abgekühlt, wobei es kondensiert. Über eine Speisepumpe erfolgt eine Druckerhöhung des Arbeitsmediums und dessen erneute Zufuhr zu dem Verdampfer. Der Kondensator wird dabei von dem Kühlmittel eines Motorkühlsystems der Brennkraftmaschine gekühlt.

Ein mit der Kühlung des Kondensators durch Kühlmittel eines Motorkühlsystems verbundener Nachteil liegt in der relativ hohen Temperatur, die dieses Kühlmittel zumindest bei betriebswarmer Brennkraftmaschine aufweist. Die Kühlwirkung des Kühlmittels in dem Kondensator ist dann relativ gering, was die Einstellung eines relativ hohen Drucks für das Arbeitsmedium auf der Niederdruckseite der Kreisprozessvorrichtung bedingt, um dieses mittels des Kondensators verflüssigen zu können. Ein solcher relativ hoher Druck auf der Niederdruckseite der Kreisprozessvorrichtung führt in Kombination mit einem festgelegten Druckniveau auf der Hochdruckseite zu einem relativ niedrigen Druckverhältnis, was sich in einem entsprechend niedrigen Wirkungsgrad der Kreisprozessvorrichtung niederschlägt.

Antriebseinheiten, die eine Brennkraftmaschine und eine Kreisprozessvorrichtung kombinieren, sind zudem aus der WO 2015/143323 A1, der DE 10 2016 212 303 A1, der DE 10 2016 212 232 A1, der EP 2 2554 806 A1, der EP 3 026 246 A1 und der EP 2 573 335 A2 bekannt. Zumindest die WO 2015/143323 A1 offenbart dabei auch eine serielle Verschaltung von zwei Kondensatoren in einer Kreisprozessvorrichtung.

Die DE 10 2016 102 625 A1 offenbart ein elektrifiziertes Kraftfahrzeug mit einer Brennstoffzelle, das eine Kreisprozessvorrichtung als Klimaanlage umfasst, in der ein erster Kondensator flüssigkeitsgekühlt und ein zweiter Kondensator luftgekühlt ist.

Die WO 2012/022288 A2 beschreibt eine Kraftwerksanlage mit einer Kreisprozessvorrichtung, die eine Arbeitsmittelpumpe, einen Verdampfer, eine Turbine und einen Kondensator umfasst. Der Kondensator ist auch in einen ein weiteres Arbeitsmittel aufweisenden Kreislauf integriert, welcher mit einer Expansionsvorrichtung zur Erzeugung von kinetischer Energie zusammenwirkt, die Flüssigstickstoff oder Flüssigluft expandiert. In diesen Kreislauf ist eine weitere Arbeitsmittelpumpe, einen Wärmetauscher zur Abgabe von Wärmeenergie von dem weiteren Arbeitsmittel an ein zum Betreiben der Expansionsvorrichtung vorgesehenes Fluid und ein weiterer Wärmetauscher, mittels dessen dem weiteren Arbeitsmittel durch das von der Expansionsvorrichtung nach einem Expansionsvorgang ausgestoßene Fluid Wärmeenergie entziehbar ist, angeordnet ist. Gemäß einer Ausgestaltungsform einer solchen Kraftwerksanlage kann dem Kondensator ein zusätzlicher Kondensator zur bedarfsweisen Unterstützung zugeordnet sein, der mit einer als Kühlturm ausgebildeten Luft-, Nass- oder Hybridkühleinrichtung zusammenwirkt.

Der Erfindung lag die Aufgabe zugrunde, eine Antriebseinheit für ein Kraftfahrzeug gemäß der eingangs beschriebenen Art hinsichtlich des mittels der Kreisprozessvorrichtung erzielbaren Wirkungsgrads zu verbessern.

Diese Aufgabe wird durch eine Antriebseinheit gemäß dem Patentanspruch 1 gelöst. Ein Kraftfahrzeug mit einer solchen Antriebseinheit ist Gegenstand des Patentanspruchs 9. Ein Verfahren zum Betreiben einer konkreten Ausgestaltungsform einer erfindungsgemäßen Antriebseinheit ist Gegenstand des Patentanspruchs 10. Vorteilhafte Ausgestaltungsformen der erfindungsgemäßen Antriebseinheit und damit des erfindungsgemäßen Kraftfahrzeugs sowie bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist eine Antriebseinheit für ein Kraftfahrzeug sowie ein Kraftfahrzeug mit einer solchen Antriebseinheit vorgesehen, wobei die Antriebseinheit eine Brennkraftmaschine umfasst, die einen Verbrennungsmotor sowie einen Abgasstrang, über den Abgas aus dem Verbrennungsmotor abführbar ist, aufweist. Die Antriebseinheit umfasst weiterhin eine Kreisprozessvorrichtung, die eine Verdampfungsvorrichtung, eine Expansionsvorrichtung, eine Kondensationsvorrichtung sowie vorzugsweise eine Arbeitsmediumpumpe aufweist, wobei die Verdampfungsvorrichtung in den Abgasstrang der Brennkraftmaschine integriert ist, um zumindest bedarfsweise Wärmeenergie des Abgases auf ein Arbeitsmedium der Kreisprozessvorrichtung zu übertragen. Mittels der Kreisprozessvorrichtung kann im Betrieb der Antriebseinheit zumindest temporär eine Wandlung von Wärmeenergie des Abgases in einem rechtsläufigen thermodynamischen Kreisprozess in mechanische Arbeit realisiert werden, wobei ein solcher Kreisprozess
- einen direkten oder indirekten Wärmeübergang von dem Abgas auf das Arbeitsmedium in der Verdampfungsvorrichtung umfasst, wodurch die Temperatur und/oder der Druck des Arbeitsmediums erhöht wird, und
- eine Expansion des Arbeitsmediums in der Expansionsvorrichtung, bei der es sich beispielsweise um eine Turbine handeln kann, zur Erzeugung der mechanischen Arbeit umfasst, und
- einen direkten oder indirekten Wärmeübergang von dem Arbeitsmedium auf ein Kühlmedium in der Kondensationsvorrichtung umfasst und
- vorzugsweise ein Fördern bei gleichzeitiger Druckerhöhung des flüssigen Arbeitsmediums zu der Verdampfungsvorrichtung mittels der Arbeitsmediumpumpe umfasst.

Vorzugsweise ist vorgesehen, dass es sich bei dem Kreisprozess um einen Dampfkreisprozess und insbesondere um einen sogenannten "Organic-Rankine-Cycle" (ORC) handelt.

Die Kondensationsvorrichtung einer solchen Antriebseinheit umfasst einen ersten von dem Arbeitsmedium durchströmbaren Kondensator und einen zweiten von dem Arbeitsmedium durchströmbaren Kondensator, der dem ersten Kondensator in Strömungsrichtung des Arbeitsmediums nachgeschaltet ist. Durch eine solche Reihenschaltung von mindestens zwei Kondensatoren kann ein besonders weitgehendes Kühlen und damit ein Verflüssigen des Arbeitsmediums auch bei einem relativ niedrigen Druck des Arbeitsmediums auf der Niederdruckseite, d.h. in dem Abschnitt der Kreisprozessvorrichtung, der zwischen der Expansionsvorrichtung und der vorzugsweise vorgesehenen Arbeitsmediumpumpe gelegen ist, realisiert werden. Dadurch kann ein relativ großes Verhältnis des Drucks des Arbeitsmediums auf der Hochdruckseite im Vergleich zu dem Druck des Arbeitsmediums auf der Niederdruckseite und damit ein relativ großer Wirkungsgrad im Betrieb der Kreisprozessvorrichtung erreicht werden.

Eine erfindungsgemäße Antriebseinheit umfasst weiterhin einen Bypass zur bedarfsweisen Vorbeileitung des Arbeitsmediums an dem ersten Kondensator. Ein Bypass zur bedarfsweisen Vorbeileitung des Arbeitsmediums an dem zweiten Kondensator kann ergänzend vorgesehen sein. Dies ermöglicht in vorteilhafter Weise eine bedarfsgerecht angepasste Kühlung des Arbeitsmediums in den verschiedenen Kondensatoren, insbesondere in Abhängigkeit von der Temperatur des Arbeitsmediums. Beispielsweise kann es vorteilhaft vorgesehen sein, dass das Arbeitsmedium bei einer nur relativ niedrigen Temperatur ausschließlich in dem zweiten Kondensator gekühlt wird, weil in diesem aufgrund einer bevorzugten Ausgestaltung aus Aluminium ein besonders guter Wärmeübergang zwischen dem Arbeitsmedium und dem in dem zweiten Kondensator genutzten Kühlmittel, vorzugsweise Luft, realisiert werden kann. Zudem kann in diesem Fall vermieden werden, dass der vorzugsweise in ein Kühlsystem der Brennkraftmaschine integrierte erste Kondensator von dem Kühlmittel des Kühlsystems durchströmt werden muss, womit das Erzeugen einer Förderleistung, die hierfür erforderlich wäre, vermieden werden kann. Andererseits kann es beispielsweise vorteilhaft sein, lediglich den ersten Kondensator von dem Arbeitsmedium durchströmen zu lassen, wenn die damit erreichbare Kühlwirkung für das Arbeitsmedium ausreichend ist oder wenn das zur Kühlung des Arbeitsmediums in dem zweiten Kondensator genutzte Kühlmittel, vorzugsweise Umgebungsluft, nicht kalt genug ist, um eine relevante Kühlwirkung für das Arbeitsmedium zu generieren. Der Strömungswiderstand, der für ein zusätzliches Durchströmen des zweiten Kondensators erforderlich wäre, kann dadurch vermieden werden. Dadurch kann insbesondere eine relativ geringe Antriebsleistung für die vorzugsweise von der Kreisprozessvorrichtung umfasste Arbeitsmediumpumpe erreicht werden. Dementsprechend kann im Rahmen eines erfindungsgemäßen Verfahrens vorgesehen sein, dass das Arbeitsmedium nur dann über den zweiten Kondensator geführt wird, wenn die zur Kühlung des Arbeitsmediums in dem zweiten Kondensator vorgesehene Kühlluft eine niedrigere Temperatur als das in den zweiten Kondensator eintretende Arbeitsmedium aufweist.

Vorzugsweise kann vorgesehen sein, dass der erste Kondensator in einen Kühlkreis eines Kühlsystems integriert ist, in dem ein flüssiges Kühlmittel enthalten ist. Dabei kann das Kühlsystem weiterhin bevorzugt auch den Verbrennungsmotor beziehungsweise einen darin ausgebildeten Kühlkanal integrieren. Insbesondere kann vorgesehen sein, dass der Verbrennungsmotor in denselben Kühlkreis integriert ist, der auch den ersten Kondensator der Kreisprozessvorrichtung umfasst. Auf diese Weise kann das Kühlmittel des Kühlsystems, das für eine Kühlung der Brennkraftmaschine und insbesondere auch des Verbrennungsmotors vorgesehen ist, gleichzeitig für ein Kühlen des Arbeitsmediums der Kreisprozessvorrichtung in dem ersten Kondensator genutzt werden. Dies ermöglicht einerseits die Realisierung einer relativ kompakten Ausgestaltung für die erfindungsgemäße Antriebseinheit. Weiterhin kann dadurch die Abwärme, die das Kühlmittel in dem ersten Kondensator aufnimmt, in einer Warmlaufphase der Brennkraftmaschine zur möglichst schnellen Aufwärmung des Kühlmittels genutzt werden. Dadurch kann einerseits die Brennkraftmaschine relativ schnell ihre Betriebstemperatur erreichen, was mit einem relativ geringen Kraftstoffverbrauch und relativ niedrigen Schadstoffemissionen während der Warmlaufphase verbunden sein kann. Weiterhin kann dadurch relativ schnell eine ausreichend große Heizleistung eines ebenfalls in das Kühlsystem integrierten Heizungswärmetauschers, der insbesondere zum Erwärmen von Luft, die anschließend einem Innenraum eines eine erfindungsgemäße Antriebseinheit umfassenden Kraftfahrzeugs zugeführt wird, vorgesehen ist, realisiert werden.

Insbesondere bei einer solchen Ausgestaltung einer erfindungsgemäßen Antriebseinheit, bei der das Arbeitsmedium der Kreisprozessvorrichtung in dem ersten Kondensator durch Kühlmittel eines Kühlsystems der Brennkraftmaschine gekühlt wird, kann sich die erfindungsgemäße Kombination mit einem zweiten Kondensator vorteilhaft auswirken, weil die Temperatur des Kühlmittels des Kühlsystems für einen vorteilhaften Betrieb der Brennkraftmaschine und insbesondere des Verbrennungsmotors zumindest bei betriebswarmer Brennkraftmaschine relativ hoch liegen kann (beispielsweise bei ca. 70 °C), was jedoch mit einer relativ geringen Kühlleistung in dem ersten Kondensator verbunden ist. Ohne die erfindungsgemäße Kombination mit einem zweiten Kondensator könnte daher in dem ersten Kondensator ein Verflüssigen des Arbeitsmittels lediglich bei einem relativ hohen Systemdruck auf der Niederdruckseite der Kreisprozessvorrichtung realisiert werden, was sich entsprechend negativ auf den Wirkungsgrad der Kreisprozessvorrichtung auswirken könnte.

Alternativ oder ergänzend besteht auch die Möglichkeit, die Kühlleistung des ersten Kondensators für das Arbeitsmedium zu erhöhen, wenn diesem, beispielsweise infolge einer Integration in ein Kühlsystem einer Brennkraftmaschine, relativ warmes Kühlmittel zugeführt wird, indem dem ersten Kondensator ein Kühlmittelkühler zugeordnet wird, der, vorzugsweise unmittelbar, stromauf bezüglich der Strömungsrichtung des Kühlmittels, d.h. bevor dieses in den Kondensator eintritt, in das Kühlsystem integriert ist. Hierbei handelt es sich vorzugsweise um einen Kühlmittelkühler, der konkret dafür vorgesehen ist, dem ersten Kondensator möglichst kaltes Kühlmittel zuzuführen, um dessen Kühlwirkung hinsichtlich des Arbeitsmediums zu erhöhen. Dementsprechend kann dieser Kühlmittelkühler insbesondere zusätzlich zu mindestens einem weiteren in das Kühlsystem integrierten Kühlmittelkühler vorgesehen sein.

Bei einer solchen Ausgestaltung einer Antriebseinheit besteht auch die Möglichkeit, auf den zweiten Kondensator zu verzichten, weil stets mittels des ersten Kondensators eine ausreichend große Kühlleistung realisiert werden kann, jedoch ist dies nicht Teil der Erfindung.

Gemäß einer weiterhin bevorzugten Ausgestaltungsform einer erfindungsgemäßen Antriebseinheit kann vorgesehen sein, dass der zweite Kondensator luftgekühlt ist. Dies weist einerseits den Vorteil einer relativ einfachen konstruktiven Ausgestaltung dieses zweiten Kondensators auf. Dies gilt insbesondere, weil kein konstruktiv relativ aufwändiges zusätzliches Kühlsystem erforderlich ist, um das Arbeitsmedium in dem zweiten Kondensator zu kühlen. Vielmehr wird hierfür vorzugsweise Umgebungsluft genutzt, die zumindest bei einer betriebswarmen Brennkraftmaschine üblicherweise eine Temperatur aufweist, die deutlich unterhalb der Temperatur des Kühlmittels des Kühlsystems der Brennkraftmaschine liegen kann und daher ein zusätzliches Kühlen des Arbeitsmediums in dem zweiten Kondensator gewährleistet. Für eine ausreichende Kühlleistung des zweiten Kondensators kann insbesondere eine Durchströmung des zweiten Kondensators durch die (Umgebung-)Luft realisiert werden, die auf einer Fortbewegung eines die Antriebseinheit umfassenden Kraftfahrzeugs beruht. Alternativ, beispielsweise auch bei einem stehenden Kraftfahrzeug, oder unterstützend kann eine solche Durchströmung auch mittels eines dem zweiten Kondensator zugeordneten Gebläses realisiert werden. Bei diesem Gebläse kann es sich auch um dasselbe Gebläse handeln, das einem (Haupt-)Kühlmittelkühler des Kühlsystems der Brennkraftmaschine zugeordnet sein kann. Dabei kann insbesondere auch vorgesehen sein, dass der zweite Kondensator mit dem Kühlmittelkühler und ggf. auch mit dem Gebläse in einem Verbund, d.h. in einer baulichen Einheit, kombiniert ist.

Vorzugsweise kann vorgesehen sein, dass der erste Kondensator aus Stahl, vorzugsweise aus Edelstahl, und/oder der zweite Kondensator aus Aluminium, insbesondere aus einer Aluminiumlegierung, ausgestaltet ist. Dabei wird unter einer "Ausgestaltung" aus Stahl beziehungsweise Aluminium eine Konstruktion verstanden, bei der zumindest die mit dem Arbeitsmedium in Kontakt kommenden Flächen der entsprechenden Bauteile der Kondensatoren aus dem jeweiligen Material hergestellt sind. Dabei kann insbesondere vorgesehen sein, dass diese mit dem Arbeitsmedium in Kontakt kommenden Bauteile insgesamt oder sogar die Kondensatoren insgesamt aus dem jeweiligen Material hergestellt sind. Im Vergleich zu Stahl weist die Verwendung von Aluminium in einem Kondensator beziehungsweise grundsätzlich in einem Wärmetauscher den Vorteil einer relativ hohen Wärmeleitfähigkeit und damit eines relativ großen Wärmeübergangs zwischen dem Arbeitsmedium und dem jeweiligen Kühlmittel auf. Ein weiterer Vorteil von Aluminium im Vergleich zu Stahl hinsichtlich der Ausgestaltung eines Kondensators beziehungsweise eines Wärmetauschers liegt in der geringeren Dichte des Aluminiums, woraus ein geringeres Bauteilgewicht eines Kondensators aus Aluminium im Vergleich zu einem Kondensator aus Stahl resultieren kann. Zudem kann ein Kondensator beziehungsweise Wärmetauscher aus Aluminium kostengünstiger herstellbar sein als ein entsprechender Kondensator beziehungsweise Wärmetauscher aus Stahl und insbesondere aus Edelstahl. Ein Nachteil bei der Verwendung von Aluminium für einen Kondensator beziehungsweise Wärmetauscher einer Kreisprozessvorrichtung liegt jedoch in einer möglichen Korrosionsempfindlichkeit (sogenannte Alkoholatkorrosion) des Aluminiums in Kombination mit bestimmten Arbeitsmedien, insbesondere mit einem auch in einer erfindungsgemäßen Antriebseinheit vorzugsweise vorgesehenen Arbeitsmedium auf Ethanol-Basis (z.B. Ethanol mit oder ohne Ölzugabe oder eine Ethanol-Wasser-Mischung, ebenfalls mit oder ohne Ölzugabe). Da eine solche Alkoholatkorrosion in einem Kondensator aus Aluminium lediglich bei relativ hohen Temperaturen des Arbeitsmediums in einem relevanten Maße auftritt, besteht in vorteilhafter Weise durch die Reihenschaltung mit dem ersten Kondensator die Möglichkeit, den zweiten Kondensator aus Aluminium auszugestalten, weil das Arbeitsmedium infolge einer Kühlung in dem ersten Kondensator bei einem Eintritt in den zweiten Kondensator bereits ausreichend weit abgekühlt worden sein kann. Der erste Kondensator ist dagegen vorzugsweise aus Stahl und insbesondere aus Edelstahl ausgebildet, weil dieser zumindest zeitweise im Betrieb der Kreisprozessvorrichtung von relativ heißem Arbeitsmedium durchströmt wird. Eine Ausgestaltung des ersten Kondensators aus Aluminium wäre daher mit einer erheblichen Gefahr einer Alkoholatkorrosion verbunden.

Weiterhin bevorzugt kann vorgesehen sein, dass eine erfindungsgemäße Antriebseinheit einen Ausgleichsbehälter für das Arbeitsmedium, der stromab des zweiten Kondensators und stromauf der vorzugsweise vorgesehenen Arbeitsmediumpumpe in die Kreisprozessvorrichtung integriert ist, aufweist. Der Ausgleichsbehälter kann dabei insbesondere teilweise mit dem Arbeitsmedium und teilweise mit einem Gas gefüllt sein, wobei der Druck des Gases gezielt mittels einer Druckbeeinflussungsvorrichtung vergrößerbar und verringerbar ist. Dies ermöglicht in vorteilhafter Weise den Systemdruck auf der Niederdruckseite der Kreisprozessvorrichtung an unterschiedliche Temperaturen des Arbeitsmediums, die durch die Kondensatoren realisierbar sind, anzupassen.

Bei dem Verbrennungsmotor einer erfindungsgemäßen Antriebseinheit kann es sich vorzugsweise um einen (selbstzündenden und qualitätsgeregelten) Dieselmotor oder um einen (fremdgezündeten und quantitätsgeregelten) Ottomotor oder um eine Kombination aus Diesel- und Ottomotor, z.B. um einen Verbrennungsmotor mit homogener Kompressionszündung, handeln. Der Verbrennungsmotor kann dabei grundsätzlich mit einem beliebigen Kraftstoff, der überwiegend aus Wasserstoff und/oder Kohlenwasserstoffen besteht, insbesondere mit einem derzeit üblichen Flüssigkraftstoff (d.h. mit Diesel-Kraftstoff oder Benzin) oder mit einem (bei Umgebungsbedingungen) gasförmigen Kraftstoff (insbesondere mit Erdgas (CNG), LNG, LPG oder Wasserstoff) betrieben werden beziehungsweise betreibbar sein.

Bei einem erfindungsgemäßen Kraftfahrzeug kann es sich insbesondere um ein radbasiertes und nicht schienengebundenes Kraftfahrzeug (vorzugsweise ein PKW oder ein LKW, dann insbesondere auch ein schwerer LKW mit Zugmaschine und Auflieger) handeln. Dabei kann der Verbrennungsmotor der Antriebseinheit des Kraftfahrzeugs insbesondere zur (direkten oder indirekten) Bereitstellung der Antriebsleistung für das Kraftfahrzeug vorgesehen sein.

Die Erfindung wird nachfolgend anhand eines in den Zeichnungen dargestellten Ausgestaltungsbeispiels näher erläutert. In den Zeichnungen zeigt:
- Fig. 1:: ein erfindungsgemäßes Kraftfahrzeug; und
- Fig. 2:: eine erfindungsgemäße Antriebseinheit für ein Kraftfahrzeug gemäß der Fig. 1.

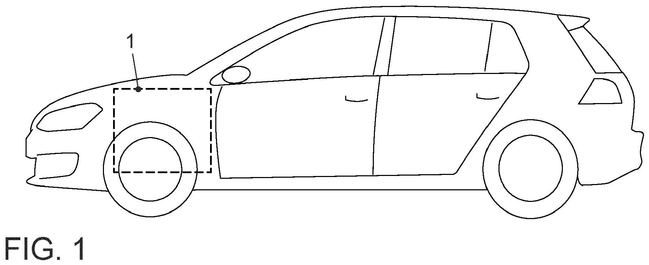

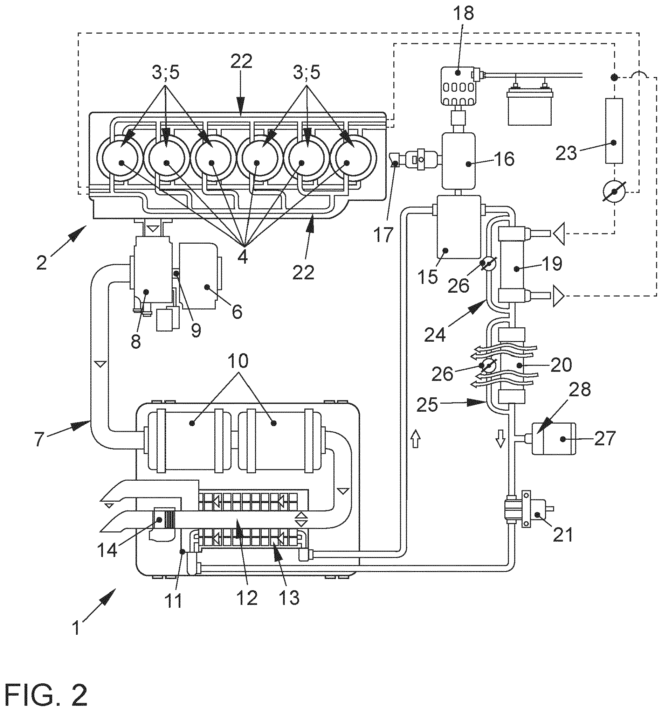

Die Fig. 1 zeigt ein (erfindungsgemäßes) Kraftfahrzeug mit einer erfindungsgemäßen Antriebseinheit 1. Eine solche Antriebseinheit umfasst gemäß der Fig. 2 eine Brennkraftmaschine mit einem Verbrennungsmotor 2, der beispielsweise als Hubkolbenmotor mit sechs Zylindern 3 ausgebildet ist. In den Zylinder 3 ist jeweils ein Kolben 4 beweglich geführt. Die Kolben 4 begrenzen mit den Wänden des zugehörigen Zylinders 3 sowie mit einem Zylinderkopf (nicht dargestellt) des Verbrennungsmotors 1 jeweils einen Brennraum 5. In den Brennräumen 5 werden in einem Betrieb des Verbrennungsmotors 2 Gemischmengen, die aus Frischgas, das im Wesentlichen aus Luft besteht und das mittels eines Abgasturboladers verdichtet worden sein kann, sowie aus direkt in die Brennräume 5 eingespritztem Kraftstoff bestehen, verbrannt. Das Frischgas wird dem Verbrennungsmotor 1 über einen mit Ausnahme eines Frischgasverdichters 6 des Abgasturboladers nicht dargestellten Frischgasstrang zugeführt.

Das bei der Verbrennung der Gemischmengen entstandene Abgas wird über einen Abgasstrang 7 von dem Verbrennungsmotor 2 abgeführt. Dabei durchströmt das Abgas zunächst eine Abgasturbine 8 des Abgasturboladers, die mit dem Frischgasverdichter 6 über eine Welle 9 antriebsverbunden ist, und anschließend zwei Abgasnachbehandlungseinrichtungen 10, beispielsweise einen Katalysator sowie einen Partikelfilter. Stromab der Abgasnachbehandlungseinrichtungen 10 ist eine Verdampfungsvorrichtung 11 einer Kreisprozessvorrichtung der Antriebseinheit in den Abgasstrang 7 integriert. Dabei bildet die Verdampfungsvorrichtung 11 zwei Strömungspfade für das Abgas aus: ein zentraler Strömungspfad dient als Bypass 12 zur funktionalen Umgehung der Verdampfungsvorrichtung 11. Abgas das über diesen Bypass 12 geführt wird, führt zu einem nur sehr geringen Übergang von Wärmeenergie auf ein die Verdampfungsvorrichtung 11 ebenfalls durchströmendes Arbeitsmedium der Kreisprozessvorrichtung. Ein zweiter Strömungspfad führt dagegen durch einen Wärmetauschabschnitt 13 der Verdampfungsvorrichtung 11, in dem durch einen großflächigen (indirekten) wärmetauschenden Kontakt (über entsprechende Trennwände) mit dem Arbeitsmedium ein möglichst weitgehender Übergang von Wärmeenergie von dem Abgas auf das Arbeitsmedium realisiert wird. Zur Steuerung der Mengen des über den Bypass 12 einerseits und/oder den Wärmetauschabschnitt 13 der Verdampfungsvorrichtung 11 geführten Abgases kann ein in den Bypass 12 integriertes Ventil in Form einer Abgasklappe 14 genutzt werden.

Im Betrieb der Brennkraftmaschine kann ein solcher Übergang von Wärmeenergie des Abgases auf das in einem Kreislauf der Kreisprozessvorrichtung strömende Arbeitsmedium zu einem Verdampfen und Überhitzen des Arbeitsmediums, das stromauf (bezüglich der Strömungsrichtung des Arbeitsmediums) der Verdampfungsvorrichtung 11 in der flüssigen Phase vorliegt, in der Verdampfungsvorrichtung 11 führen. Im Rahmen eines rechtsläufigen Kreisprozesses, der mittels der Kreisprozessvorrichtung durchführbar ist, kann dieser überhitzte Dampf des Arbeitsmediums dann in einer Expansionsvorrichtung 15 expandiert werden, wobei mechanische Leistung erzeugt wird, die wiederum zur Erzeugung von elektrischer Energie und/oder für einen den Verbrennungsmotor 2 unterstützenden, direkten mechanischen Antrieb des Kraftfahrzeugs genutzt werden kann. Hierzu umfasst die in der Fig. 2 dargestellte Antriebseinheit ein entsprechendes Verteilsystem 16, mittels dessen die an der Expansionsvorrichtung 15 abgegriffene mechanische Leistung in variablem Ausmaß auf entweder die Abtriebswelle 17 (Kurbelwelle) des Verbrennungsmotors 2 und/oder auf einen Generator 18, der in ein elektrisches System der Brennkraftmaschine integriert ist, aufgeteilt werden kann.

Stromab der Expansionsvorrichtung 15 wird das Arbeitsmedium bei der Durchführung des Kreisprozesses mittels zwei Kondensatoren 19, 20 abgekühlt und wieder in die flüssige Phase überführt (kondensiert). Eine Arbeitsmediumpumpe 21 der Kreisprozessvorrichtung sorgt dann für das erneute Zuführen des flüssigen Arbeitsmediums zu der Verdampfungsvorrichtung 11.

Erfindungsgemäß ist ein erster Kondensator 19 sowie ein zweiter Kondensator 20, der dem ersten Kondensator19 in Strömungsrichtung des Arbeitsmediums nachgeschaltet ist, vorgesehen. Der erste Kondensator 19 kann bedarfsweise neben dem Arbeitsmedium auch von einem flüssigen Kühlmittel eines stark vereinfacht dargestellten Kühlsystems durchströmt werden, in das zudem der Verbrennungsmotor 2 beziehungsweise darin ausgebildete Kühlkanäle 22 sowie ein Kühlmittelkühler 23 integriert sind. Der zweite Kondensator 20 ist dagegen luftgekühlt, d.h. dieser kann von als Kühlmittel dienender Umgebungsluft durchströmt werden. Jedem der Kondensatoren 19, 20 ist zudem ein Bypass 24, 25 zugeordnet, in den jeweils ein Bypassventil 26 integriert ist. Bei geöffnetem Bypassventil 26 strömt das Arbeitsmedium aufgrund eines deutlich geringeren Strömungswiderstands primär über den jeweiligen Bypass 24, 25 und nicht über den zugeordneten Kondensator 19, 20.

In einem Betrieb der Kreisprozessvorrichtung kann eine Kühlung des Arbeitsmediums nacheinander in den beiden Kondensatoren 19, 20 erfolgen, wodurch stromab des zweiten Kondensators 20 eine relativ niedrige Temperatur des Arbeitsmediums auch dann erreicht werden kann, wenn das Kühlmittel des Kühlsystems bei einer betriebswarmen Brennkraftmaschine eine relativ hohe Temperatur von beispielsweise ca. 70° beim Eintritt in den ersten Kondensator 19 aufweist. Eine solche relativ niedrige Temperatur des Arbeitsmediums stromab des zweiten Kondensators 20 ermöglicht, dieses auch bei einem relativ niedrigen Systemdruck auf der Niederdruckseite der Kreisprozessvorrichtung zu verflüssigen, wodurch in Kombination mit einem vorgegebenen Systemdruck auf der Hochdruckseite der Kreisprozessvorrichtung ein relativ großes Druckverhältnis und damit auch ein relativ hoher Wirkungsgrad im Betrieb der Kreisprozessvorrichtung realisiert werden kann.

Da die Umgebungsluft bei der vorgesehenen Verwendung der Antriebseinheit in einem Kraftfahrzeug gemäß der Fig. 1 üblicherweise niedriger als die Temperatur des Kühlmittels des Kühlsystems bei betriebswarmer Brennkraftmaschine ist, kann auch mittels eines konstruktiv relativ einfach ausgestalteten, luftgekühlten zweiten Kondensators eine noch erhebliche Kühlwirkung für das Arbeitsmedium realisiert werden.

Weil das Arbeitsmedium beim Durchströmen des ersten Kondensators 19 noch eine relativ hohe Temperatur aufweist, ist dieser aus Edelstahl ausgestaltet. Durch die Verwendung dieses Materials stellt sich die Problematik einer Alkoholatkorrosion unabhängig von der Temperatur des Arbeitsmediums nicht. Der zweite Kondensator 20 ist dagegen aus Aluminium beziehungsweise aus einer Aluminiumlegierung ausgestaltet, so dass grundsätzlich die Problematik einer Alkoholatkorrosion des zweiten Kondensators 20 bestehen könnte, was bei der erfindungsgemäßen Antriebseinheit jedoch dadurch vermieden wird, dass das Arbeitsmedium beim Eintritt in den zweiten Kondensator 20 infolge einer bereits erfolgten Kühlung mittels des ersten Kondensators 19 eine so niedrige Temperatur aufweisen kann, dass eine Alkoholatkorrosion ausgeschlossen werden kann.

In den Abschnitt des Kreislaufs der Kreisprozessvorrichtung, der stromab des zweiten Kondensators 20 und stromauf der Arbeitsmediumpumpe 21 gelegen ist, ist noch ein Ausgleichsbehälter 27 integriert, der eine Druckbeeinflussungsvorrichtung 28 umfasst, mittels der der Druck eines Gases, mit dem der Ausgleichsbehälter 27 teilweise gefüllt ist beeinflussbar, d.h. vergrößerbar und verringerbar ist. Dadurch wird ermöglicht, ein definiertes Druckniveau des Arbeitsmediums auf der Niederdruckseite der Kreisprozessvorrichtung einzustellen.

### Bezugszeichenliste

- 1: Antriebseinheit
- 2: Verbrennungsmotor
- 3: Zylinder
- 4: Kolben
- 5: Brennraum
- 6: Frischgasverdichter
- 7: Abgasstrang
- 8: Abgasturbine
- 9: Welle
- 10: Abgasnachbehandlungseinrichtung
- 11: Verdampfungsvorrichtung
- 12: Bypass der Verdampfungsvorrichtung
- 13: Wärmetauschabschnitt der Verdampfungsvorrichtung
- 14: Abgasklappe
- 15: Expansionsvorrichtung
- 16: Verteilsystem
- 17: Abtriebswelle des Verbrennungsmotors
- 18: Generator
- 19: erster Kondensator
- 20: zweiter Kondensator
- 21: Arbeitsmediumpumpe
- 22: Kühlkanal des Verbrennungsmotors
- 23: Kühlmittelkühler
- 24: Bypass des ersten Kondensators
- 25: Bypass des zweiten Kondensators
- 26: Bypassventil
- 27: Ausgleichsbehälter
- 28: Druckbeeinflussungsvorrichtung

## Patentansprüche

1. Antriebseinheit (1) für ein Kraftfahrzeug mit
- einer Brennkraftmaschine, die einen Verbrennungsmotor (2) sowie einen Abgasstrang (7), über den Abgas von dem Verbrennungsmotor (2) abführbar ist, umfasst, und
- einer Kreisprozessvorrichtung, die eine in den Abgasstrang (7) integrierte Verdampfungsvorrichtung (11), eine Expansionsvorrichtung (15) und eine Kondensationsvorrichtung umfasst,
wobei die Kondensationsvorrichtung einen ersten sich an die Expansionsvorrichtung anschließenden und von einem Arbeitsmedium durchströmbaren Kondensator (19) und einen zweiten von dem Arbeitsmedium durchströmbaren Kondensator (20), der dem ersten Kondensator (19) in Strömungsrichtung des Arbeitsmediums nachgeschaltet ist, umfasst, **gekennzeichnet durch** einen Bypass (24) zur bedarfsweisen Vorbeileitung des Arbeitsmediums an dem ersten Kondensator (19).

2. Antriebseinheit (1) gemäß Anspruch 1, wobei der erste Kondensator (19) in einen Kühlkreis eines Kühlsystems integriert ist, in dem ein flüssiges Kühlmittel enthalten ist.

3. Antriebseinheit (1) gemäß Anspruch 2, wobei das Kühlsystem auch den Verbrennungsmotor (2) integriert.

4. Antriebseinheit (1) gemäß Anspruch 3, wobei der Verbrennungsmotor (2) in den auch den ersten Kondensator (19) umfassenden Kühlkreis des Kühlsystems integriert ist.

5. Antriebseinheit (1) gemäß einem der vorhergehenden Ansprüche, wobei der zweite Kondensator (20) luftgekühlt ist.

6. Antriebseinheit (1) gemäß einem der vorhergehenden Ansprüche, wobei der erste Kondensator (19) aus Stahl und/oder der zweite Kondensator (20) aus Aluminium ausgestaltet ist.

7. Antriebseinheit (1) gemäß einem der vorhergehenden Ansprüche, mit einem weiteren Bypass (25) zur bedarfsweisen Vorbeileitung des Arbeitsmediums an dem zweiten Kondensator (20).

8. Antriebseinheit (1) gemäß einem der vorhergehenden Ansprüche, mit einem Ausgleichsbehälter (27) für das Arbeitsmedium, der stromab des zweiten Kondensators (20) und stromauf einer Pumpe (21) für das Arbeitsmedium in die Kreisprozessvorrichtung integriert ist, wobei der Ausgleichsbehälter (27) teilweise mit dem Arbeitsmedium und teilweise mit einem Gas gefüllt ist, wobei der Druck des Gases mittels einer Druckbeeinflussungsvorrichtung (28) vergrößerbar und verringerbar ist.

9. Kraftfahrzeug mit einer Antriebseinheit (1) gemäß einem der vorhergehenden Ansprüche.

10. Verfahren zum Betreiben einer Antriebseinheit (1) gemäß Anspruch 5 und Anspruch 7 oder gemäß einem der von den Ansprüchen 5 und 7 abhängigen Ansprüche, **dadurch gekennzeichnet, dass** das Arbeitsmedium nur dann über den zweiten Kondensator (20) geführt wird, wenn die zur Kühlung des Arbeitsmediums in dem zweiten Kondensator (20) vorgesehene Kühlluft eine niedrigere Temperatur als das in den zweiten Kondensator (20) eintretende Arbeitsmedium aufweist.

## Claims

1. A drive unit (1) for a motor vehicle, comprising
- an internal combustion engine which comprises a combustion engine (2) and an exhaust gas system (7) via which exhaust gas can be discharged from the combustion engine (2), and
- a cyclic process device which comprises an evaporation device (11) integrated into the exhaust gas system (7), an expansion device (15) and a condensation device,
the condensation device comprising a first condenser (19) which adjoins the expansion device and through which a working medium can flow, and a second condenser (20) through which the working medium can flow and which is connected downstream of the first condenser (19) in the flow direction of the working medium, **characterized by** a bypass (24) for bypassing the working medium to the first condenser (19) as required.

2. The drive unit (1) according to claim 1, wherein the first condenser (19) is integrated into a cooling circuit of a cooling system in which a liquid coolant is contained.

3. The drive unit (1) according to claim 2, wherein the cooling system also integrates the combustion engine (2).

4. The drive unit (1) according to claim 3, wherein the combustion engine (2) is integrated in the cooling circuit of the cooling system, which circuit also comprises the first condenser (19).

5. The drive unit (1) according to any of the preceding claims, wherein the second condenser (20) is air-cooled.

6. The drive unit (1) according to any of the preceding claims, wherein the first condenser (19) is made of steel and/or the second condenser (20) is made of aluminum.

7. The drive unit (1) according to any of the preceding claims, comprising a further bypass (25) for bypassing the working medium to the second condenser (20) as required.

8. The drive unit (1) according to any of the preceding claims, comprising an equalization tank (27) for the working medium, which tank is integrated into the cyclic process device downstream of the second condenser (20) and upstream of a pump (21) for the working medium, wherein the equalization tank (27) is partially filled with the working medium and partially with a gas, wherein the pressure of the gas can be increased and reduced by means of a pressure-influencing device (28).

9. A motor vehicle having a drive unit (1) according to any of the preceding claims.

10. A method for operating a drive unit (1) according to claim 5 and claim 7 or according to any of the claims dependent on claims 5 and 7, **characterized in that** the working medium is only guided via the second condenser (20) when the cooling air provided for cooling the working medium in the second condenser (20) has a lower temperature than the working medium entering the second condenser (20).

## Revendications

1. Unité d'entraînement (1) pour un véhicule automobile, comportant
- un moteur à combustion interne qui comprend un moteur à combustion (2) ainsi qu'une branche de gaz d'échappement (7) par l'intermédiaire de laquelle du gaz d'échappement peut être évacué hors du moteur à combustion (2), et
- un dispositif de processus cyclique qui comprend un dispositif d'évaporation (11) intégré dans la branche de gaz d'échappement (7), un dispositif d'expansion (15) et un dispositif de condensation,
dans laquelle le dispositif de condensation comprend un premier condenseur (19) qui se raccorde au dispositif d'expansion et est traversé par un fluide de travail et un second condenseur (20) qui est traversé par le fluide de travail et qui est monté en aval du premier condenseur (19) dans le sens d'écoulement du fluide de travail, **caractérisée par** une dérivation (24) permettant de conduire le fluide de travail au premier condenseur (19) en fonction des besoins.

2. Unité d'entraînement (1) selon la revendication 1, dans laquelle le premier condenseur (19) est intégré dans un circuit de refroidissement d'un système de refroidissement dans lequel est contenu un réfrigérant liquide.

3. Unité d'entraînement (1) selon la revendication 2, dans laquelle le système de refroidissement intègre également le moteur à combustion (2).

4. Unité d'entraînement (1) selon la revendication 3, dans laquelle le moteur à combustion (2) est intégré dans le circuit de refroidissement du système de refroidissement comprenant également le premier condenseur (19).

5. Unité d'entraînement (1) selon l'une des revendications précédentes, dans laquelle le second condenseur (20) est refroidi par air.

6. Unité d'entraînement (1) selon l'une des revendications précédentes, dans laquelle le premier condenseur (19) est constitué d'acier et/ou le second condenseur (20) est constitué d'aluminium.

7. Unité d'entraînement (1) selon l'une des revendications précédentes, comportant une dérivation supplémentaire (25) permettant de conduire le fluide de travail au second condenseur (20) en fonction des besoins.

8. Unité d'entraînement (1) selon l'une des revendications précédentes, comportant un réservoir de compensation (27) pour le fluide de travail, lequel réservoir est intégré dans le dispositif de processus cyclique en aval du second condenseur (20) et en amont d'une pompe (21) pour le fluide de travail, le réservoir de compensation (27) étant rempli partiellement du fluide de travail et partiellement d'un gaz, la pression du gaz pouvant être augmentée et diminuée au moyen d'un dispositif d'influence de la pression (28).

9. Véhicule automobile comportant une unité d'entraînement (1) selon l'une des revendications précédentes.

10. Procédé permettant de faire fonctionner une unité d'entraînement (1) selon la revendication 5 et la revendication 7 ou selon l'une des revendications dépendant des revendications 5 et 7, **caractérisé en ce que** le fluide de travail n'est acheminé à travers le second condenseur (20) que lorsque l'air de refroidissement prévu pour le refroidissement du fluide de travail dans le second condenseur (20) présente une température inférieure à celle du fluide de travail entrant dans le second condenseur (20).
